# EUROPEAN PATENT APPLICATION

(11) **EP 2 074 886 A2**
(43) Date of publication of application: **01.07.2009**
(21) Application number: 08254081.6
(22) Date of filing: 19.12.2008
(51) Int. Cl.: A21B 3/13, A47J 43/20

(54) **Baking pan**

(30) Priority: 20.12.2007 GB 0724911
(71) Applicant: Fluorocarbon Group Limited, Hertford SG13 7HN (GB)
(72) Inventor: Savage, Thomas John, Ware Hertfordshire SG12 0BA (GB); Potter, Gary Malcolm, Welwyn Garden City Hertfordshire AL7 4HP (GB)
(74) Representative: Bailey, Richard Alan

(57) **Abstract**

A baking pan 1, 10, 20 comprising a body of a polymeric material which polymeric material includes within the body between 2 and 15%wt of an electrically conductive material that is substantially evenly distributed through the body, the polymeric material of the baking pan 1, 10, 20 being capable of withstanding temperatures of up to 280C.

## Description

This invention relates to a baking pan suitable for use in the industrial production of baked goods such as bread, and in particular to a polymer based baking pan for such use.

The term baking pan is used to indicate any suitable type of baking pan for the baking of products such as bread or cake mixes. Consequently the term is being used to indicate articles that are also commonly referred to as Tins, Pans, cups or moulds whether they are formed as a tray or are formed for assembly into straps or slip pan straps.

Traditionally the baking industry has used metallic pans coated with a silicone glaze, and more recently a fluorocarbon coating to allow for the easy removal of the product. The silicone glazed pans also require the use of oils to assist release. However, the glazes and coatings will wear away and will need to be re-glazed or recoated with the subsequent removal of the pans from the production.

Further due the recycling of the pans in the bakery and their continual use the pans do become damaged and it is not uncommon for a part of the pan or other stray object to find its way into the final baked product. This clearly is something that is not acceptable to the end user because of the potential health risks and liability issues that will be created. The most common source of contamination is in fact from the adjacent plant machinery. Therefore to avoid any baked product reaching the customer including any metallic objects the standard bakery lines are fitted with metal detection devices that enable metallic objects to be detected and the product removed before leaving the bakery.

In recent times there has been a move in the domestic bake ware market to move towards polymer based pans because they are lighter and easier to produce. This is a move that is now beginning to be seen in the industrial market place which to now has resisted the move in view of issues concerning the detection of parts of the baking pan in the final baked product. The polymeric material of the bake ware is not detectable using the current detection equipment developed and supplied on most baking lines. However the industry has decided to push ahead despite the potential problem because of the drive to keep costs down and the fact that the polymeric pans are lighter, reduce the need for reprocessing such as recoating, reduce the energy to process the baked product and can be manufactured accurately and reproducibly via automated moulding techniques. The industrial producers interests will be maintained if the issues concerning the detectability of the material can be overcome.

The present invention is concerned with providing a solution to the above-mentioned problem concerning the detectability of the polymeric material of the bake ware used.

In accordance with the present invention there is provided a baking pan comprising a body of a polymeric material which polymeric material includes within the body between 2 and 15%wt of an electrically conductive material that is substantially evenly distributed through the body, the polymeric material of the baking pan being capable of withstanding temperatures of up to 280C.

The present invention is intended as a direct replacement of the currently available metal based baking pans in a conventional baking line. Due to the possibility that with conventional lines using metal based pans that an inclusion formed from a part of the baking pan may be present in the final baked product these conventional lines generally include metal detection apparatus. This enables the inclusion in a product to be detected and the product removed before it is passed to a customer.

One type of detection equipment used operates on the following principle. There is provided three equally spaced coils through which the baked product passes in a tube. The coils are equally spaced apart and comprise a receiver coil, transmitter coil, and receiver coil in that order. The product is passed through the coils. The central coil or transmitter coil transmits a radio frequency signal similar in frequency to that used in AM broadcasting. The receiver coils act to pick up the radio signal. The received signal of the receiver coils is measured and any difference in voltage between the coils is determined and a signal generated. If a zero signal is detected then no signal is generated between the coils and there is nothing in the product.

However any inclusion will generate a signal no matter what material the inclusion is formed from. The signal generated is only of a truly measurable level if there is a conductive object moving between the coils and therefore the system really can only detect inclusions formed from metallic inclusions in the product. The signal generated with non metallic inclusions is not of a level that will activate the system but they do experience some difficulty with signals from some natural ingredients for example berries which can give a false signal.

Any inclusion including a conductive material can be detected but the effect is most marked when a metallic material is present. With the move towards modem polymer baking trays if the inclusion is formed from the material of the polymer material of the baking tray it will not be detected.

The inclusion of the electrically conductive material in the polymer body of the material of the baking pan provides the material with a degree of electrical conductivity and reaction under the metal detection apparatus currently used on the baking lines that will activate the detection system. Consequently the material of the polymer baking tray becomes detectable in the same way that the metal of the metal baking pans is. The advantage with this is that the current systems, in particular the metal inclusion detectors of the conventional baking lines is usable with the baking pans of the current invention.

Suitable electrically conductive materials for use with the present invention include metals such as Silver, Nickel, Copper, Aluminium, Iron, as well as materials such as Carbon Black, which can be used to form a conductive polymer. However, other materials may be used. For example, the electrically conductive material could comprise a metal alloy, a metal oxide or a ferrite material. Further, the material could be one or more of a cubic ferrite material, a hexagonal ferrite or garnet material, or MFe₂O₄ where M is Ni, Mn, Co or Cu. It will be understood by those skilled in the art that any conductive material may be used. However other factors will come into play as to their suitability, such as cost, which would be the consideration with Gold, suitability for contact with foodstuffs, and any detrimental effect an the physical properties of the base polymer.

In addition some of the suitable materials may also need to be adapted to enable there use. For example Aluminium whilst being a good conductor may also oxidise to an extent that renders it ineffective in the environment to which it will be exposed. In this case the material may be encapsulated in a polymeric material to prevent the oxidation.

The polymer material of the baking pan may be any suitable material that is capable of withstanding the temperatures of up to 280C present in an industrial oven without significant loss of mechanical integrity or melting or chemically degrading and also which have a non stick property with regard to product being baked. Suitable polymers include Liquid Crystal Polymers, Polyhenyene Sulfide (PPS) or high grade polyesters.

Typical examples of suitable polymers are Polybonzoate Naphthoate (a wholly aromatic co-polyester), Polyphenylene Sulfide, and Polycyclohexylene-dimethylene terephthalate.

Further with regard to the release of the product from the pan hydrophobic polymers may be more suitable.

Further it will be understood by those skilled in the art that materials having a lower temperature suitability may be used in particular applications where lower baking temperatures will be used.

With regard to the level of the electrically conductive material present in the polymer this level is dictated by the signal response obtained and ensuring that the material is detectable. Further as will be well appreciated if the loading of the conductive material is over a certain level then there is a chance that the mechanical integrity of the material and anything formed from the material will be reduced if not lost. The level of the conductive material is therefore determined to provide sufficient response to the metal detector and also to maintain the mechanical integrity of the baking pan.

It has been found that levels in the range of 2 to 15%wt of the conductive material will fulfil the necessary criteria in most cases. Preferably the level is maintained below 10%wt and most preferably below 7.5%wt.

It is envisaged that products formed from the materials of the current invention will include flat trays, bread moulds, cake moulds, bun moulds, baguette trays etc. It is also envisaged that the baking pans/trays manufactured from the materials of the current application can be manufactured using any of the currently available techniques, for example injection moulding, vacuum forming, cast moulding, compression moulding, rotational casting or spin casting. The trays or pans may be formed from flat or corrugated section extruded sheet.

The present invention will now be illustrated, by way of description of an example with reference to the accompanying drawings, in which:
Figures 1a to 1d show various views of a bread making mould made from the material of the current invention;
Figures 2a to 2c show various views of a second bread making mould made from the material of the current invention;
Figures 3 a to 3c show a cake or bun tray made from the material of the current invention; and
Figures 4a to 4c show a slip pan arrangement suitable for manufacture from the present claimed invention and suitable for the mounting of multiple trays to permit rapid removal and replacement.

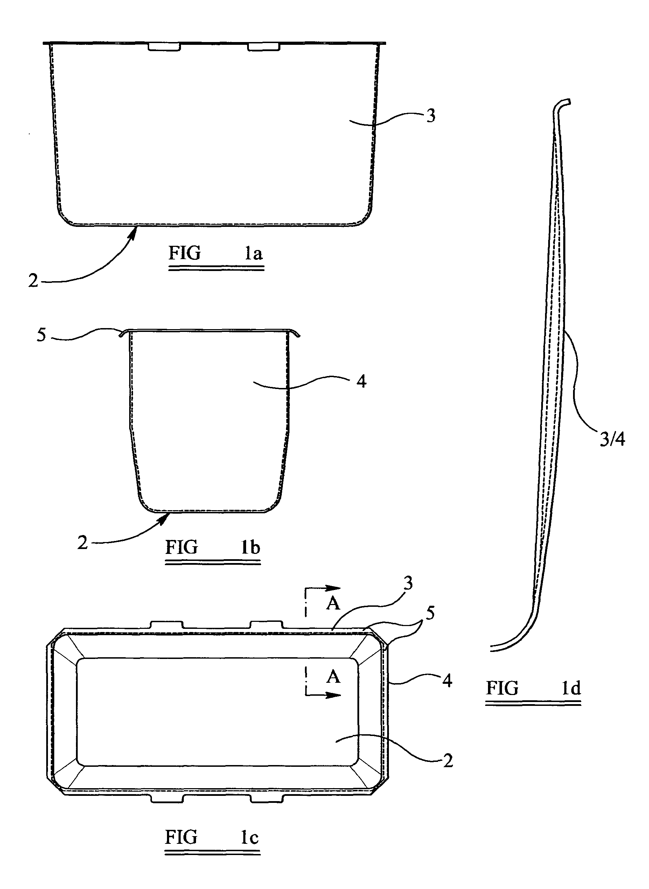

Now referring to Figures 1a to 1d of the drawings there is shown a design of a bread making mould 1 suitable for manufacture from the material of the current invention.

The mould 1 comprises a rectangular shaped vessel having a base 2 two side walls 3 and two end walls 4. The overall shape of the mould is slightly tapered from the base 2 of the mould to the upper section of the walls 3,4 so that the upper section of the mould, section remote from the base 2 has a larger cross section than the base of the mould.

Each of the walls 3, 4 has a bow shape which has a thicker central material cross section than the outer, upper and lower, portions thereof. A lip section 5 which curls downwardly is formed at the upper extreme of the side walls and end walls. The lip section 5 is greater in dimension for the side walls 3 than it is for the end walls.

Further one of the side walls 3 is formed with two flat abutments extending outwardly of the side wall 3.

This type of baking mould 1 is intended for location in a tray provided with suitable openings for the location and securing of the moulds. This enables a tray of moulds to be constructed and easily placed in the oven for baking. The openings are provided in a flat tray structure which may be formed as a grid rod type construction with the lip 5 overhanging the rod and securing the mould in the tray. Alternatively the tray may be formed as a simple flat structure with the mould located in the openings and the lips resting against the structure. The advantage with these types of arrangements relates to the release of the baked bread from the moulds 1. With this arrangement the bread may be simply released from the moulds 1.

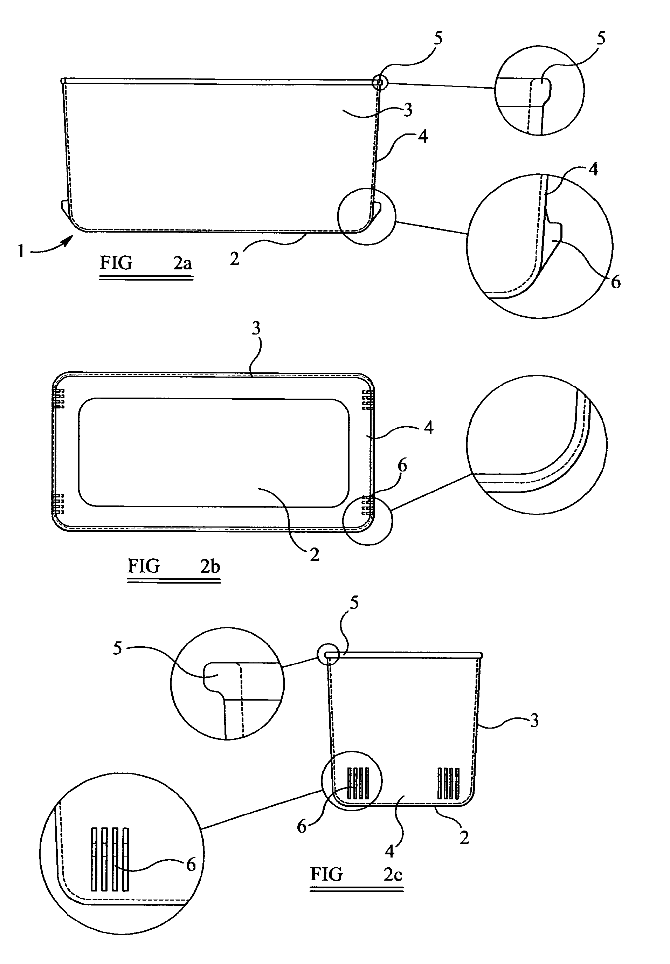

Now referring to figures 2a to 2c of the drawings there is shown a second type of bread making mould 1 suitable for manufacture from the material of the present - invention. The bread making mould 1 of this drawing is similar to that of the Figures 1a to 1d and like numerals have been used to describe like components.

The design shown in Figures 2a to 2c differs from that shown in figures 1 to 1d in that the lip 5 is formed as a bulbous solid member and there is provided in the lower portion of the end walls 4 locating fins 6.

The bulbous section of the lip 5 is formed slightly more pronounced on the side walls 3 than on the end walls 4.

The moulds shown in Figures 2a to 2c as with the earlier described moulds are again intended for location in a tray having openings. In this case the shape of the mould and the provision of the lips prevents the mould from slipping through the openings and secures the mould in position in the tray. Further the locating fins 6 with this arrangement slot into mean provided in the tray to properly lock and secure the mould in position in the tray like member.

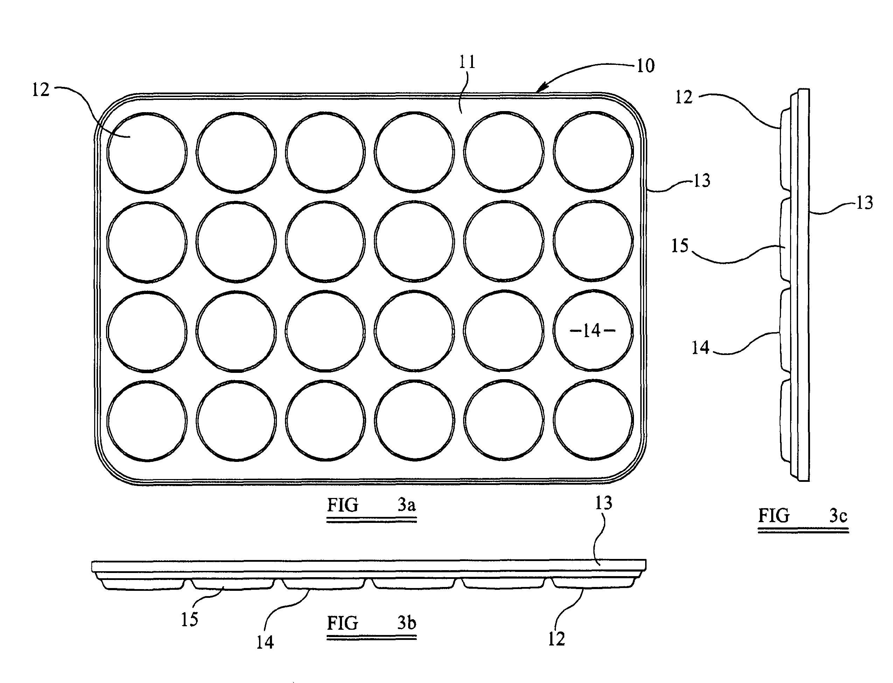

Now referring to Figures 3 to 3c of the drawings there is shown a cake or bun tray 10 that is suitable for manufacture from the material of the present invention. In this embodiment the tray 10 comprises a substantially rectangular flat section 11 having formed therein 24 cup like sections 12. The edges of the tray 10 are formed with an upstanding wall section 13 that surrounds the tray 10.

Each of the cup like sections 12 is circular in shape having a base section 14 and a circumferential side wall 15 that connects the base section 14 and the flat surface 11. The cup like sections 12 each form a well into which raw material for baking may be placed. In the case of a bun tray this is a measured portion of dough and for a cake r-tray a measured portion of cake mix.

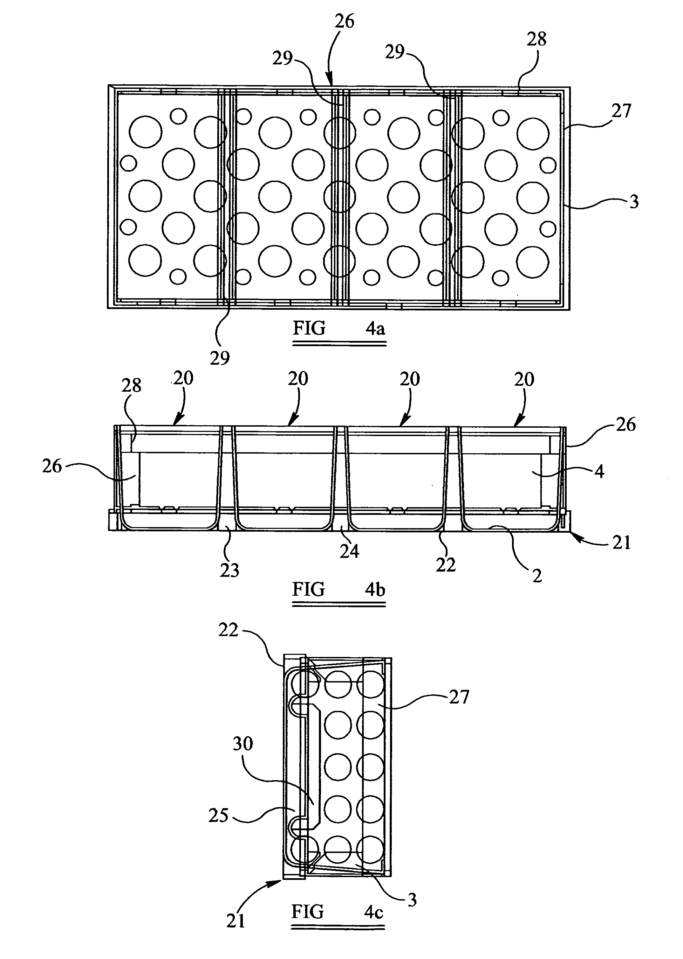

Now referring to Figures 4a to 4c of the drawings there is shown a slip arrangement suitable for the baking of bread. The slip comprises location of 4 bread making moulds 20 in a slip 21. The bread making moulds 20 are very similar to the mould described with reference to figures 1a to 1d of the drawings and therefore like component shave been used to describe like components.

The slip 21 is formed from metal plate section, such as steel or alu-steel and comprises a base 22 having a circumferential lip 23, including two side lips 24 and two end lips 25; two side walls 26; two end walls 27; a retaining member 28 and three cross bars 29.

Each of the side walls 26 and end walls 27 is formed form flat section metal plate with perforations through out the body thereof and the end walls 27 are formed with indented section 30.

The retaining member 28 is formed from L section metal bar. The cross bars 29 are formed from T section metalbar having a downwardly extending section 31.

In constructing the slip 21 the side walls 26 and end walls 27 are fitted into the base 22 so that they abut respective side lips 23 and end lips 24 of the base 22 to form a confined space within the base 22. The end walls 27 are fitted so that the indented sections 30 are disposed so that they abut the base 22 to form lifting means for the slip 21. Four moulds 20 are now located in the confined space of the slip 21 so that they are in parallel configuration extending with there major length across the slip 21.

The retaining member 28 is now fitted over the top of the side walls 26 and end walls 27 so that the L section extends downwardly of the slip 21 and thereby the moulds 20 are locked into the slip and the side walls 26 and end walls 27 are secured in position in the slip 21. The cross bars 29 are fitted across the retaining member 28 between respective moulds 20 so that the downwardly extending section 31 of the cross bar is located between the respective moulds separating and securing the moulds 20 in a defined space.

Typical examples of the moulds 1, 10, 20 made in accordance with the present invention are detailed below:

The pans may be made from:
Polybonzoate Naphthoate (a wholly aromatic co-polyester), or
Polyphenylene Sulfide, or
Polycyclohexylene-dimethylene terephthalate.

Each of these materials is generally suitable for the environment to which the pan is to be subjected. The material has sufficient material integrity at the oven temperature, approximately 280 Celsius that the pan will maintain shape and conformity and will also not transfer to the product being baked.

Further the selection of material is made to enable quick and easy release of the baked product from the pan. Further to enhance this feature the material of the pan may also include additive materials.

In accordance with the invention the polymeric material of the pan includes a quantity of an electrically conductive material that is distributed substantially uniformly throughout the body of the pan. It is envisaged that the electrically conductive material will be of metallic form, for example it may comprise one or more of Silver, Nickel, Copper, Aluminium, Iron. However, other materials may be used. For example, the electrically conductive material could comprise a metal alloy, a metal oxide or a ferrite material. Further, the material could be one or more of a cubic ferrite material, a hexagonal ferrite or garnet material, or MFe₂O₄ where M is Ni, Mn, Co or Cu. The quantity of electrically conductive material incorporated into the pan is in the range of 2 and 15%wt.

A number of modification and alterations may be made to the arrangements described hereinbefore without departing from the scope of the invention.

## Claims

1. A baking pan comprising a body of a polymeric material which polymeric material includes within the body between 2 and 15%wt of an electrically conductive material that is substantially evenly distributed through the body, the polymeric material of the baking pan being capable of withstanding temperatures of up to 280C.

2. A baking pan as claimed in claim 1 in which the electrically conductive materials comprises one or more of Silver, Nickel, Copper, Aluminium, Iron, or Carbon Black.

3. A baking pan as claimed in claim 3 in which the electrically conductive material is encapsulated in the polymeric material.

4. A baking pan as claimed in claim 1, wherein the electrically conductive material comprises a metal, a metal alloy, a metal oxide or a ferrite material.

5. A baking pan as claimed in claim 1, wherein the electrically conductive material comprises one or more of a cubic ferrite material, a hexagonal ferrite or garnet material, or MFe₂O₄ where M is Ni, Mn, Co or Cu..

6. A baking pan as claimed in any one of the preceding claims where in the polymeric material is selected from Liquid Crystal Polymers, Polyphenylene Sulfide (PPS) or high grade polyesters.

7. A baking pan as claimed in any one of the preceding claims where in the polymeric material is selected from Polybonzoate Naphthoate, Polyphenylene Sulfide, or Polycyclohexylene-dimethylene terephthalate.

8. A baking pan as claimed in any of the preceding claims wherein the level of the electrically conductive material provided is below 10%wt.

9. A baking pan as claimed in claim 8 wherein the level of the electrically conductive material is below 7.5%wt.
